# EUROPEAN PATENT APPLICATION

(11) **EP 3 879 048 A1**
(43) Date of publication of application: **15.09.2021**
(21) Application number: 20380011.5
(22) Date of filing: 11.03.2020
(51) Int. Cl.: E04H 12/12, E04H 12/34

(54) **METHOD FOR CONSTRUCTING A WIND TURBINE TOWER AND MOULDING SYSTEM**

(71) Applicant: SIEMENS GAMESA RENEWABLE ENERGY INNOVATION & TECHNOLOGY, S.L., 31621 Sarriguren (Navarra) (ES)
(72) Inventor: Oteiza Piera, Mikel, 31620 Huarte (ES)
(74) Representative: Aspacher, Karl-Georg

(57) **Abstract**

Method for constructing a wind turbine tower (2), wherein the tower (2) is formed by stacking multiple vertical segments (5, 6, 7), each comprising a segment wall (12) that extends along the entire circumference of the respective segment and that is cast as one piece using a respective mould (14, 15), the mould having an inner mould wall (18, 19) and an outer mould wall (16, 17) defining the shape of the segment wall, wherein the outer mould wall and/or the inner mould wall of all moulds or of a subgroup of the moulds are formed from multiple wall sections (20 - 46), wherein each of these moulds is formed using common wall sections (20 - 27), that are used in all of these moulds, and a respective set of specific wall sections (28 - 46), wherein at least two of these moulds, use different sets of specific wall sections.

## Description

The invention concerns a method for constructing a wind turbine tower, wherein the tower is formed by stacking multiple vertical segments, each comprising a segment wall that extends along the entire circumference of the respective segment and that is cast as one piece using a respective mould, the mould having an inner mould wall and an outer mould wall defining the shape of the segment wall. Additionally the invention concerns a moulding system designed to provide multiple different moulds for casting different vertical segments of a wind turbine tower, a wind turbine tower and a wind turbine.

The active components of a wind turbine are typically at least partially mounted on top of a tower, e.g. in a nacelle mounted on top of the tower. The most common materials for constructing such a tower are concrete and steel. When concrete is used as a building material it is typically not possible to cast the complete tower in a single mould. Therefore a common approach for constructing wind turbine towers from concrete uses pre-fabricate vertical segments, e.g. cylindrical segments, that are stacked on top of each other to form the tower.

To achieve an optimum stability while keeping the necessary amount of material low, it is typically advantageous to use an approximately conical shape for the tower in which the diameter of the tower decreases with increasing height. When the tower is constructed by stacking multiple vertical segments the segments therefore need to have different diameters. It is therefore necessary to use a separate mould for each of the segments. Therefore separate moulds need to be produced for each of the segments. This is especially problematic, when a relatively low number of a certain type of tower should be produced, since a relatively large number of moulds for a relatively small number of produced towers is necessary. The large number of necessary moulds is also problematic, when the vertical segments of the tower should be manufactured, especially cast, locally at or close to the location where the wind turbine is constructed. In this case the large number of moulds need to be transported to this location or a different set of moulds is necessary in each location.

The amount and/or complexity of the necessary moulds can be reduced when an additional circumferential sectioning of the tower is used. The tower is then built up by connecting the segments in the circumferential direction and in the height direction. Such approaches are discussed e.g. in the documents EP 2 082 131 B1 and EP 2 215 320 B1 and in the article "Gouda Wind Farm Precast Concrete Towers" in "Concrete Bet-on", the official publication of the Concrete Society of Southern Africa NPC; Number 144, March 2016, Page 8. A segmentation of the tower wall into multiple circumferential sections does however require the use of additional brackets and therefore adds weight to the tower. It can also negatively impact the stability of the tower, therefore potentially requiring additional material to achieve the same stability as a design that uses vertical segments that are cast as single pieces.

It is therefore the object of the present invention to reduce the effort necessary to construct a wind turbine tower from concrete or another cast material while avoiding the previously discussed drawbacks of a circumferential segmentation of the tower walls.

The problem is solved by the initially discussed method, wherein the outer mould wall and/or the inner mould wall of all moulds or of a subgroup of the moulds are formed from multiple wall sections, wherein each of these moulds is formed using common wall sections, that are used in all of these moulds, and a respective set of specific wall sections, wherein at least two of these moulds, preferably all of these moulds, use different sets of specific wall sections.

The invention is based on the idea of using a modular mould system in which different moulds for different vertical segments are constructed as necessary using multiple wall sections. It was recognized that for certain types of approximately conically shaped wind turbine towers the wall sections can be chosen in such a way that a relatively large number of common wall sections can be used in most or even all of the different moulds used to cast the different vertical segments.

To cast different types of segments, it is therefore not necessary to provide a completely different mould for each of these segments, but it is sufficient to provide different sets of specific wall sections that can be combined with the common wall sections to form these different moulds. The resulting moulding system that provides all necessary wall sections to cast the different vertical segments can therefore be a lot lighter and smaller and require less material than the preparation of completely separate moulds for the different vertical segments. This is especially advantageous when the vertical segments should be cast locally to avoid the cost and effort necessary for shipping large and heavy vertical segments to the location at which the wind turbine tower is to be constructed. Instead of shipping a large amount of different moulds to this specific location or constructing a large amount of separate moulds locally, it is sufficient to ship the moulding system to the respective location or construct it locally. The proposed method can therefore reduce the cost and further improve the ecological benefit of a wind turbine.

In the inventive method any material that can be cast by using a respective mould can be used to form the vertical segments. In most cases the vertical segments will be cast from concrete. It is also possible to position additional support structures in the mould, e.g. a steel mesh, to form the segments from reinforced concrete.

The subgroup of moulds that all use the common wall sections does not necessarily include all of the moulds used for casting the vertical segments that comprise multiple wall sections. It might be e.g. be possible to have multiple subgroups of vertical segments that use moulds constructed from multiple wall segments, wherein each of these subgroups uses a different set of common wall sections for each mould in a subgroup.

The respective inner and/or outer mould wall can be formed from at least three or at least four curved or angled wall sections and at least three or at least four flat wall sections. If both the inner and outer mould wall are formed from multiple wall sections, they preferably comprise the same number of curved or angled wall sections and flat wall sections. Preferably the respective wall also comprises the same number of curved or angled wall sections and flat wall sections, preferably alternating in the circumferential direction.

For a flat wall section at least the section of the wall that is in contact with the cast material is flat. For a curved or angled wall section at least part of this surface is curved or forms an angle, therefore imprinting a curve or angle onto the surface of the vertical segment in the area where the mould consists of this wall section.

Both curved and angles wall sections will create a change of the surface normal of the cast segment wall in the circumferential direction. While an angled wall section will lead to a relatively sharp change, a curved section will continuously change the surface normal, preferably with an approximately constant curvature.

Since a wind turbine tower should ideally show the same behaviour, no matter from which direction a force acts onto the tower, it would typically be ideal to use a circular circumference. Increasing the number of curved or angled wall sections increases the number of "corners" of the circumference and therefore improves the approximation of such a circular shape. It should however be avoided to use a very large number of curved or angled wall sections, since this would increase the effort necessary to construct the respective mould. It was found, that the use of four curved or angled wall sections is typically a good compromise between the mould complexity and the stability and amount of required material for the tower. It would however also be possible to use up to six or up to eight or up to ten curved or angled wall sections or even a larger number of curved or angled wall section.

At least some of the curved or angled wall sections, preferably all of the curved or angled wall sections, can be common wall sections. In other words all moulds or all moulds in the subgroup can use the same or at least some of the same curved or angled wall sections.

At least some of the flat wall sections, preferably all of the flat wall sections, can be specific wall sections. In other words different moulds can be formed by swapping out all or at least some of the flat wall sections of the inner and/or outer mould walls. In a preferred embodiment different moulds are formed by keeping all curved or angled wall sections of the inner and outer mould wall the same while swapping out all flat wall sections of the inner and outer mould walls.

The width of the flat wall sections along the circumference of the segment can be different for at least two of the moulds, preferably for all of the moulds. The height of the segments and therefore the height of the curved or angled wall sections and the flat wall sections can be the same for all segments. The width of the flat wall sections can be measured at the same height for each of the segments. By using flat wall sections with a different width the diameter of the mould and therefore of the cast vertical segment can be easily varied without changing the curved or angled wall sections. Segments with a multitude of diameters can therefore be cast by simply providing different sets of flat wall sections with different width.

All curved or angled wall sections of the inner mould wall and/or all curved or angled wall sections of the outer mould wall can be identical within at least one of the moulds or for all moulds. The curved or angled wall sections are typically different for the inner and outer mould wall. When the curved or angled wall sections are the same for all moulds or at least for a subgroup of the moulds, it can therefore be sufficient to provide four identical copies of a first curved or angled wall section for the outer mould wall and for identical copies of a second curved or angled wall section for the inner mould wall to cast all vertical segments or at least all vertical segments of the subgroup.

In at least one of the moulds all flat wall sections of the inner mould wall and/or all flat wall sections of the outer mould wall can be identical to each other. This feature is preferably present in each of the moulds or at least in each of the moulds of a subgroup. Using multiple identical curved or angled wall sections and/or flat wall sections in the used moulding system does allow for a faster and easier production of such a moulding system and can also improve the portability of such a system, e.g. when the full moulding system comprising the discussed wall sections should be shipped to a certain location to construct a wind turbine there.

For at least one of the moulds, preferably for all moulds of the subgroup, the flat wall sections can have a trapezoidal shape. The flat wall sections can preferably be shorter at an upper edge than on the lower edge of the segment to be cast. Preferably the curved or angled sections have approximately parallel sidewalls in the circumferential direction. If a tight fit between the different wall segments is achieved, e.g. by clamping or binding the wall sections together, combining the curved or angular wall sections and the trapezoidal flat sections will result in the shape of a truncated pyramid or a rounded of truncated pyramid. Therefore the vertical section cast by such a mould will also have that shape and can be stacked to form an approximately conical wind turbine tower. By matching the width of the lower edge of the flat wall sections of a mould for an upper segment to the width of the upper edge of the flat wall sections of the mould for a lower segment the upper edge of the cast lower segment can match the lower edge of the cast upper segment, therefore ensuring that these segments can be stacked together.

To allow for an easy connection of the different wall segments it is advantageous when the wall segments have attached fixing means, e.g. latches, hook and eye connectors or similar means. Such means can e.g. be attached to the outside of the wall sections of the outer mould wall and to the inside of the wall sections of the inner mould wall, therefore ensuring that the fixing means do not interact with the material used for moulding.

The invention also concerns a moulding system designed to provide multiple different moulds for casting different vertical segments of a wind turbine tower, each vertical segment comprising a segment wall that extends along the entire circumference of the respective segment and that is cast as one piece using the respective mould, wherein each of the different moulds comprises an inner and outer mould wall defining the shape of the respective segment wall, wherein the moulding system is designed to provide the different moulds by providing multiple wall sections, wherein different subsets of these wall sections can be combined to form the respective inner and/or outer mould walls of the different moulds, wherein some of the provided wall sections are common wall sections that are designed to be used in all of the different moulds, and wherein some of the provided wall sections are specific wall sections, wherein different moulds use different sets of specific wall sections.

The moulding system can especially be used in the previously discussed method. The moulding system can comprise all wall sections necessary to mould the subgroup or all of the segments necessary in the inventive method. Features discussed with respect to the method according to the present invention can be transferred to the moulding system according to the present invention with the given advantages and vice versa.

To ease the assembly of the respective wall section to the respective mould the wall, sections can comprise connection means, e.g. hook and loop fasteners or latching means. Alternatively or additionally support means for supporting a user in arranging the wall sections in a desired pattern can be provided, e.g. tongues and/or grooves that interact to guide one of the wall sections into a specific position with respect to another one of the wall sections etc.

The moulding system can be designed to provide moulds in which the respective inner and/or outer mould wall is formed from at least three or at least four curved or angled wall sections and at least three or at least four flat wall sections.

At least some of the curved or angled wall sections, preferably all of the curved or angled wall sections, can be common wall sections. Additionally or alternatively at least some of the flat wall sections, preferably all of the flat wall sections, can be specific wall sections. Further advantageous features concerning the different wall sections were already discussed in detail in the context of the method according to the present invention.

The invention also concerns a wind turbine tower, the tower being formed by stacking multiple vertical segments, wherein at least two of the segments comprise a segment wall that extends along the entire circumference of the respective segment and that is cast as one piece, wherein the segment wall of the at least two segments comprises at least three or at least four curved or angled circumferential sections connected by flat circumferential sections, wherein the at least two vertical segments have identical curved or angled circumferential sections and differ with respect to the width of the flat circumferential sections along the circumference of the segment. The discussed features can apply to all segments of the tower or to a subgroup of the segments. It is especially possible that the wind turbine tower has a lower part formed by vertical segments with the previously discussed features and an upper part with differently formed segments, e.g. with strictly cylindrical or conical segments.

The discussed geometry of the vertical segments allows to produce the different vertical segments using the previously discussed moulding system and/or the method according to the present invention, since identical common wall sections can be used for the inner and/or outer mould wall to form the curved or angled circumferential sections in the different vertical segments while different sets of specific wall sections that are flat wall sections can be used to form the flat circumferential sections in the different vertical segments. Therefore the wind turbine tower according to the present invention can therefore be constructed more efficiently, reducing the cost and/or effort and/or material required to construct the tower.

Additionally the invention concerns a wind turbine comprising a wind turbine tower according to the present invention. The wind turbine can e.g. comprise a generator coupled with rotor blades, especially via a hub, on top of the wind turbine tower. Wind turbines using wind turbine towers are well-known in the prior art and will therefore not be discussed in detail.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an exemplary embodiment of a wind turbine according to the present invention, comprising an exemplary embodiment of a wind turbine tower according to the present invention,
- Fig. 2 and 3: different moulds used in an exemplary embodiment of the method for constructing a wind turbine tower according to the present invention, the moulds being provided by an exemplary embodiment of a moulding system according to the present invention,
- Fig. 4 and 5: perspective views showing the construction of the inner wall in the mould according to fig. 2 from multiple wall segments, and
- Fig. 6: examples of different flat wall segments usable to construct an inner and/or outer mould wall of a mould.

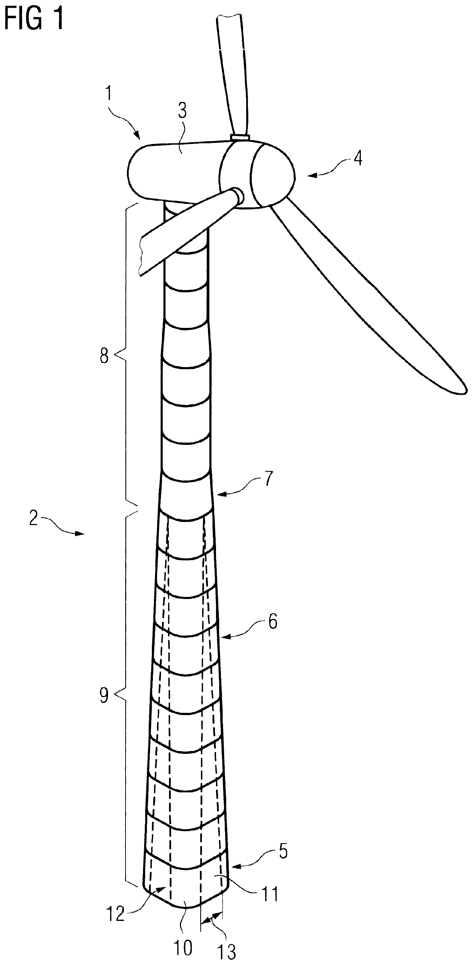

Fig. 1 shows a wind turbine 1 comprising a nacelle 3 and a rotor 4 mounted on top of a wind turbine tower 2. The wind turbine tower 2 is formed by stacking multiple vertical segments 5, 6, 7 that are each cast as one piece, e.g. from concrete. In an upper part 8 of the tower 2, the segments 7 have an approximately tubular or conical shape. In the lower part 9 of the tower 2 the segments 5, 6 are shaped as a rounded of truncated pyramid. The sizes of the segments 5, 6 are chosen in such a way that by stacking them an overall rounded truncated pyramid is formed as the lower part 9 of the tower 2.

To achieve this shape of the tower 2 the segments 5, 6, 7 need to be cast in different shapes. Therefore different moulds are required to cast the segments 5, 6, 7. Especially when a relatively low number of towers 2 should be produced, e.g. when production should be performed locally to avoid a transportation of the segments 5, 6 from a factory to the building site, providing a completely separate mould for each of the segments 5, 6, 7 would be costly in terms of material and the effort required to transport such moulds to the site or for construction at the site.

The tower 2 is therefore constructed in a way that allows the use of a moulding system in which the different moulds can be constructed from a given set of wall sections as will be discussed in more detail below. To allow this approach the segments 5, 6 of the lower part 9 of the tower 2 have a specific shape, such that a segment wall 12 that extends along the entire circumference of the respective segment 5, 6 and that is cast as one piece comprises four curved circumferential sections 10 and four flat circumferential sections 11. The different vertical segments 5, 6 in the lower part 9 of the tower 2 all have identical curved circumferential sections 10 and only differ with respect to the width 13 of the flat circumferential sections 11 along the circumference of the respective segment 5, 6. As will be discussed in more detail below, this allows the use of common wall sections of the moulds in a multitude of moulds used to cast the different vertical segments 5, 6.

As shown in fig. 1 a shape of a rounded truncated pyramid for the lower part 9 and therefore an approximation of a conical shape of the lower part 9 can be achieved by using flat circumferential sections 11 with an approximately trapezoidal shape. The curved circumferential sections can e.g. approximately have the shape of a segment of a cylinder.

In alternative embodiments, different shapes of the lower part 9 of the tower 2 could be used. It would e.g. be possible to use angled circumferential sections instead of the curved circumferential sections 10. In this case the edges of the truncated pyramid would not be rounded or at least hardly rounded. It would also be possible to increase the number of edges and therefore the number of curved or angled circumferential sections 10. It would e.g. be sufficient to use three curved circumferential sections 10 and three flat circumferential sections 12 in each segment 5, 6. It would also be possible to increase the number of used flat and curved circumferential segments 11, 12.

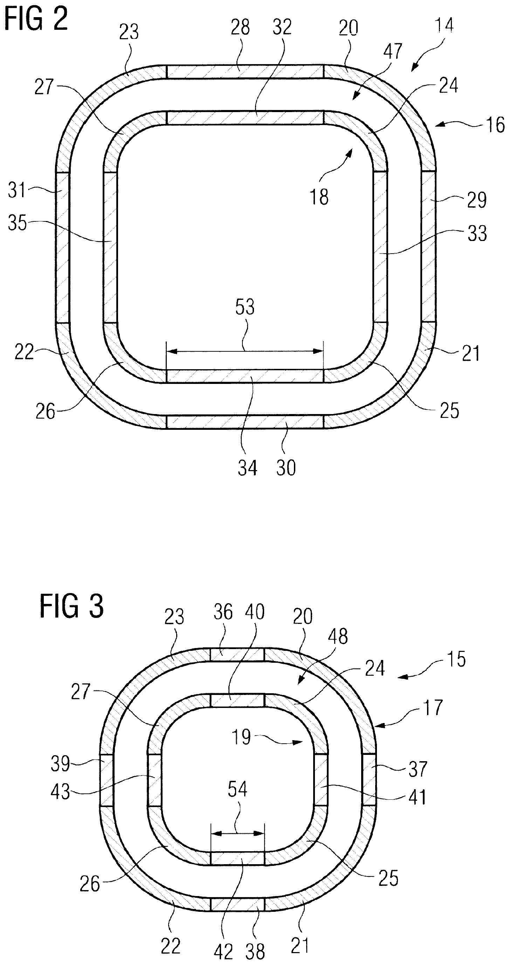

The casting of the segments 5, 6 that are vertically stacked to form the lower part 9 of the tower 2, will now be discussed in more detail with reference to figures 2 and 3 that show two exemplary moulds 14, 15. The mould 14 can e.g. be the mould used to cast the vertical segment 5 while the mould 15 can be the mould used to cast the segment 6. For reasons of clarity only the respective outer mould wall 16, 17 and the respective inner mould wall 18, 19 are shown in figures 2 and 3. A bottom plate and an optional lid used to completely close a respective inner volume 47, 48 are not shown, since these elements can be the same for all of the segments 5, 6.

The moulds 14, 15 are provided by a moulding system that provides a multitude of wall sections 20 to 43 that are used to construct the inner and outer mould walls 16 to 19 for multiple different moulds 14, 15 used to cast multiple different vertical segments 5, 6 of the wind turbine tower 2. Some of the provided wall sections 20 to 27, namely the curved wall sections 20 to 27, are common wall sections 20 to 27 used in all of the different moulds 14, 15 used to cast the vertical sections 5, 6 of the lower part 9 of the tower 2. Other wall sections 28 to 43, namely the flat wall sections 28 to 43, are specific wall sections 28 to 43 that are only used in a specific mould 14, 15. In the shown example the mould sections 28 to 35 form a first set of specific wall sections 28 to 35 used to provide the mould 14, and the mould sections 36 to 43 form a second set of specific wall sections 36 to 43 used to provide the mould 15. The wall sections 28 to 35 used for the mould 14 have a different width 53 from the width 54 of the wall sections 36 to 43 used for the mould 15. Therefore the segments 5, 6 cast by using these moulds 14, 15 differ with respect to the width 13 of the flat circumferential sections 11.

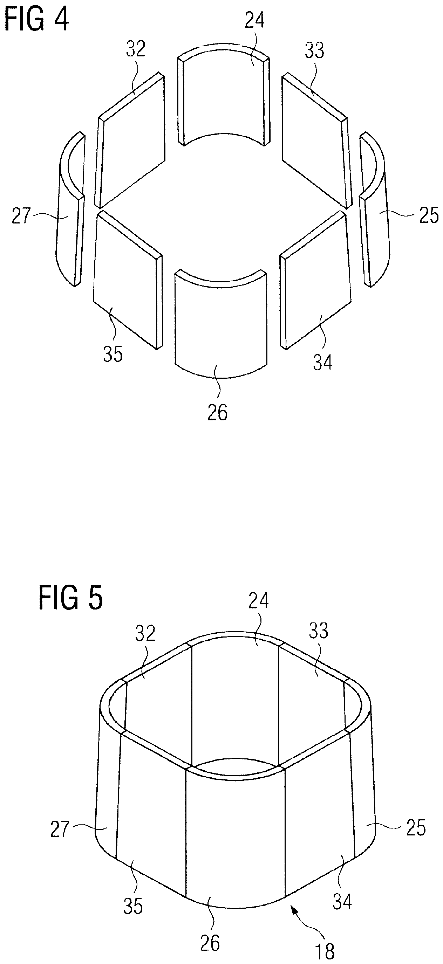

To further illustrate the construction of the respective moulds figures 4 and 5 show the wall segments 24 to 27 and 32 to 35 used to build the inner wall 18 of the mould 14 and the resulting mould 18 in a perspective view. As seen in figures 4 and 5 the flat wall sections 32 to 35 have a slightly trapezoidal shape. When the flat wall sections 32 to 35 are combined with the circumferential wall sections 24 to 27 the slightly trapezoidal shape leads to a slight leaning of all the wall sections 24 to 27 and 32 to 35 towards the centre of the mould and therefore causes the overall shape of the cast segment to be a rounded truncated pyramid.

For reasons of clarity and simplicity connection means for connecting the wall section 20 to 43 to form the respective moulds 14, 15 are not shown in figures 2 to 5. A multitude of connection means for connecting wall sections to each other are known in the prior art and can be used to form the respective mould.

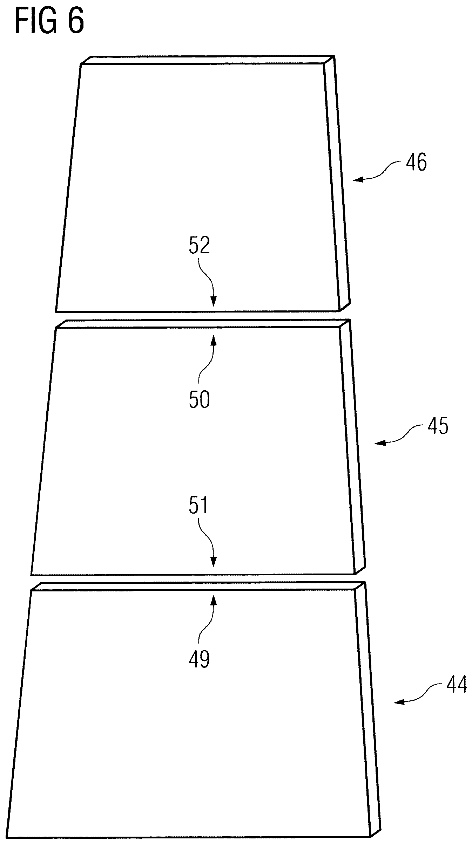

To further clarify the effect of the trapezoidal shape of the flat wall sections fig. 6 shows an example of flat wall sections 44 to 46 used in different moulds used to cast consecutive vertical segments of the lower part 9 of the tower 2. The width of the respective lower edge 51, 52 of a respective flat wall section 45, 46 used to cast a respective upper segment can be matched with the width 49, 50 of a respective flat wall section 44, 45 of a mould used to cast a respective lower vertical segment.

Although the present invention has been described in detail with reference to the preferred embodiment, the present invention is not limited by the disclosed examples from which the skilled person is able to derive other variations without departing from the scope of the invention.

## Claims

1. Method for constructing a wind turbine tower (2), wherein the tower (2) is formed by stacking multiple vertical segments (5, 6, 7), each comprising a segment wall (12) that extends along the entire circumference of the respective segment (5, 6, 7) and that is cast as one piece using a respective mould (14, 15), the mould (14, 15) having an inner mould wall (18, 19) and an outer mould wall (16, 17) defining the shape of the segment wall (12), **characterized in that** the outer mould wall (16, 17) and/or the inner mould wall (18, 19) of all moulds (14, 15) or of a subgroup of the moulds (14, 15) are formed from multiple wall sections (20 - 46), wherein each of these moulds (14, 15) is formed using common wall sections (20 - 27), that are used in all of these moulds (14, 15), and a respective set of specific wall sections (28 - 46), wherein at least two of these moulds (14, 15), preferably all of these moulds (14, 15), use different sets of specific wall sections (28 - 46).

2. Method according to claim 1, **characterized in that** the respective inner and/or outer mould wall (16 - 19) is formed from at least three or at least four curved or angled wall sections (20 - 27) and at least three or at least four flat wall sections (28 - 46).

3. Method according to claim 2, **characterized in that** at least some of the curved or angled wall sections (20 - 27), preferably all of the curved or angled wall sections (20 - 27), are common wall sections (20 - 27).

4. Method according to claim 2 or 3, **characterized in that** at least some of the flat wall sections (28 - 46), preferably all of the flat wall sections (28 - 46), are specific wall sections (28 - 46).

5. Method according to one of the claims 2 to 4, **characterized in that** a width (53, 54) of the flat wall sections (28 - 46) along the circumference of the segment (5, 6) is different for at least two of the moulds (14, 15), preferably for all of the moulds (14, 15).

6. Method according to one of the claims 2 to 5, **characterized in that** all curved or angled wall sections (24 - 27) of the inner mould wall (18, 19) and/or all curved or angled wall sections (20 -23) of the outer mould wall (14, 15) are identical within at least one of the moulds (14, 15) or for all moulds (14, 15).

7. Method according to one of the claims 2 to 6, **characterized in that** in at least one of the moulds (14, 15) all flat wall sections (32 - 35, 40 -42) of the inner mould wall (18, 19) and/or all flat wall sections (28 - 31, 36 - 39) of the outer mould wall (14, 15) are identical to each other.

8. Method according to one of the claims 2 to 7, **characterized in that** for at least one of the moulds (14, 15) the flat wall sections (28 - 46) have a trapezoidal shape.

9. Moulding system designed to provide multiple different moulds (14, 15) for casting different vertical segments (5, 6) of a wind turbine tower (2), each vertical segment (5, 6) comprising a segment wall (12) that extends along the entire circumference of the respective segment (5, 6) and that is cast as one piece using the respective mould (14, 15), wherein each of the different moulds (14, 15) comprises an inner and outer mould wall (16 - 19) defining the shape of the respective segment wall (12), **characterized in that** the moulding system is designed to provide the different moulds (14, 15) by providing multiple wall sections (20 - 46), wherein different subsets of these wall sections (20 - 46) can be combined to form the respective inner and/or outer mould wall (16 - 19) of the different moulds (14, 15), wherein some of the provided wall sections (20 -27) are common wall sections (20 - 27) that are designed to be used in all of the different moulds (14, 15), and wherein some of the provided wall sections (28 - 46) are specific wall sections (28 - 46), wherein different moulds (14, 15) use different sets of specific wall sections (28 - 46).

10. Moulding system according to claim 9, **characterized in that** the moulding system is designed to provide moulds (14, 15) in which the respective inner and/or outer mould wall (16 - 19) is formed from at least three or at least four curved or angled wall sections (20 - 27) and at least three or at least four flat wall sections (28 - 46) .

11. Moulding system according to claim 10, **characterized in that** at least some of the curved or angled wall sections (20 - 27), preferably all of the curved or angled wall sections (20 - 27), are common wall sections (20 - 27) and/or **in that** at least some of the flat wall sections (28 - 46), preferably all of the flat wall sections (28 - 46), are specific wall sections (28 - 46).

12. Wind turbine tower, the tower being formed by stacking multiple vertical segments (5, 6, 7), wherein at least two of the segments (5, 6) comprise a segment wall (12) that extends along the entire circumference of the respective segment (5, 6) and that is cast as one piece, **characterized in that** the segment wall (12) of the at least two segments (5, 6) comprises at least three or at least four curved or angled circumferential sections (10) connected by flat circumferential sections (12), wherein the at least two vertical segments (5, 6) have identical curved or angled circumferential sections (10) and differ with respect to the width (13) of the flat circumferential sections (11) along the circumference of the segment (5, 6).

13. Wind turbine, **characterized in that** it comprises a wind turbine tower (2) according to claim 12.
